(19) Europäisches Patentamt
European Patent Office
Office européen des brevets

(11) EP 4 782 200 A1

(12) **EUROPEAN PATENT APPLICATION**
published in accordance with Art. 153(4) EPC

(43) Date of publication:
**29.07.2026 Bulletin 2026/31**

(21) Application number: **24868100.9**

(22) Date of filing: **30.08.2024**

(51) International Patent Classification (IPC):
***B32B 5/18*** *(2006.01)* ***B32B 27/00*** *(2006.01)*
***C09J 7/26*** *(2018.01)* ***C09J 7/29*** *(2018.01)*
***C09J 7/38*** *(2018.01)*

(52) Cooperative Patent Classification (CPC):
**B32B 5/18; B32B 27/00; C09J 7/26; C09J 7/29; C09J 7/38**

(86) International application number:
**PCT/JP2024/031358**

(87) International publication number:
**WO 2025/063021 (27.03.2025 Gazette 2025/13)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **22.09.2023 JP 2023159109**
**04.04.2024 JP 2024060927**

(71) Applicant: **Sekisui Chemical Co., Ltd.**
**Osaka-shi, Osaka 530-8565 (JP)**

(72) Inventor: **TSUCHIYA, Kento**
**Hasuda-shi, Saitama 349-0198 (JP)**

(74) Representative: **Ter Meer Steinmeister & Partner**
**Patentanwälte mbB**
**Nymphenburger Straße 4**
**80335 München (DE)**

(54) **FOAMED LAMINATE AND ADHESIVE TAPE**

(57) A foam laminate 10 comprises a core layer 11 as a foam and a silicone compound-containing surface resin layer 12 provided on at least one surface of the core layer 11, wherein the foam laminate 10 has a static friction coefficient of 0.64 or less.

Fig. 1

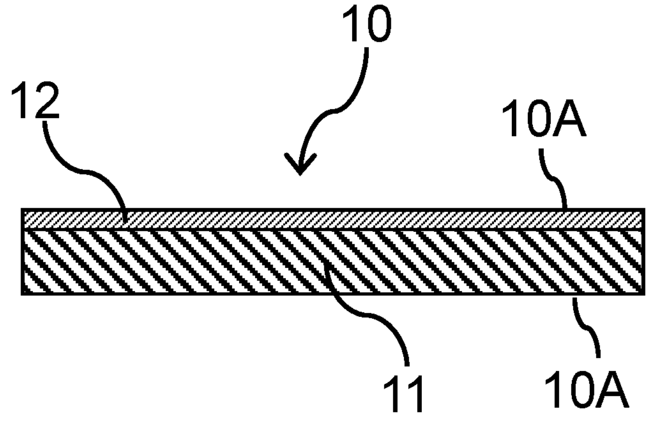


EP 4 782 200 A1

## Description

### Technical Field

The present invention relates to a foam laminate, which is a multilayer sheet containing a foam, and a pressure-sensitive adhesive tape having the foam laminate as substrate.

### Background Art

In electronic devices such as mobile phones, smartphones, tablet terminals, cameras, displays, game devices, electronic notebooks, and personal computers, foam sheets are widely used as sealing materials or shock absorbing materials. Conventionally, a polyolefin-based resin foam sheet obtained by foaming of an expandable polyolefin-based resin sheet containing a thermally decomposable foaming agent has been known as the foam sheet used for these purposes. The foam sheet may be used inside electronic devices, for example, in a form of pressure-sensitive adhesive tape with an adhesive applied to at least one side. Alternatively, in order to impart various functions to a foam sheet, it has been considered to make a foam layer into a multi-layered foam or to make a multi-layered sheet including a foam sheet and a non-foam resin sheet.

On the other hand, in a polyolefin-based resin sheet that contains a polyolefin resin, attempts have been made for enhancement in the composition and surface shape in order to impart various functions. For example, in PTL 1, in order to enhance the antifouling properties, a sheet that contains a silicone-olefin copolymer in addition to a polyolefin, with an arithmetic mean roughness Ra of the front or back surface controlled to 0.15 μm or less, is shown.

### Citation List

#### Patent Literature

PTL 1: JP 2017-206587 A

### Summary of Invention

#### Technical Problem

Recently, in portable electronic devices such as smartphones and tablet terminals, foldable terminals of which displays are folded for use, have been put into practical use. A resin foam sheet used in foldable terminals sometimes slides against a display panel when folded.

However, conventional polyolefin-based resin foam sheets have poor slipperiness, and in sliding against a panel, the resistance increases to cause snagging. As a result, a large force is applied to a foam resin layer or pressure-sensitive adhesive tape. For example, in the case where the opposite surface is fixed through an adhesive layer, problems such as peeling off of the adhesive layer may occur. In addition, in the case where a plurality of foam sheets is stacked, the sheets become difficult to peel off from each other, which causes problems such as reduced productivity in producing foams or in punching stacked foams.

In PTL 1, although use of a silicone-olefin copolymer in a polyolefin-based resin sheet is shown, neither application of the resin sheet to a foam sheet nor enhancement of the slipperiness of the resin sheet are suggested.

Accordingly, the present invention aims to provide a resin foam that maintains the flexibility as a foam, with boosted slipperiness which enhances slidability during use and productivity.

#### Solution to Problem

As a result of intensive studies, the present inventor has found that the above-mentioned problems can be solved by forming a foam laminate having a core layer as a foam and a surface resin layer provided on at least one surface of the core layer, and by incorporating a silicone compound in the surface resin layer to have a static friction coefficient equal to or less than a certain value. Thereby, the present invention as described below has been completed. In other words, the present invention provides the following items [1] to [8].

[1] A foam laminate comprising a core layer as a foam, and a silicone compound-containing surface resin layer provided on at least one surface of the core layer, the foam laminate having a static friction coefficient of 0.64 or less.
[2] The foam laminate according to the item [1], wherein the static friction coefficient is 0.6 or less.
[3] The foam laminate according to the item [1] or [2], having a thickness of 0.05 to 0.3 mm.

[4] The foam laminate according to any one of the items [1] to [3], wherein the surface resin layer has a silicone compound content of 1 to 40 mass%.

[5] The foam laminate according to any one of the items [1] to [4], wherein the surface resin layer is any one of a foam or a non-foam.

[6] The foam laminate according to any one of the items [1] to [5], wherein the surface resin layer comprises a polyolefin-based resin.

[7] The foam laminate according to any one of the items [1] to [6], wherein the silicone compound is a silicone-olefin copolymer.

[8] A pressure-sensitive adhesive tape comprising the foam laminate according to any one of the items [1] to [7] and a pressure-sensitive adhesive material provided on at least one surface of the foam laminate.

## Advantageous Effects of Invention

According to the present invention, a foam laminate that maintains the flexibility as a foam, with boosted slipperiness which enhances slidability during use and productivity, can be provided.

## Brief Description of Drawings

[Fig. 1] Fig. 1 is a schematic diagram of a foam laminate according to one embodiment of the present invention.

[Fig. 2] Fig. 2 is a schematic diagram of a foam laminate according to another embodiment of the present invention.

## Description of Embodiments

### [Foam laminate]

A foam laminate of the present invention includes a core layer as a foam, and a silicone compound-containing surface resin layer provided on at least one surface of the core layer, and has a static friction coefficient of 0.64 or less. The foam laminate of the present invention having the configuration described above maintains the flexibility as a foam and allows the slidability during use and the productivity to be enhanced with boosting slipperiness. Also, as described below, for example, in the case where a pressure-sensitive adhesive tape including a substrate made of foam laminate of the present invention is stuck to an adherend such as electric device, the pressure-sensitive adhesive tape may be peeled off from the adherend for so-called reworking to reuse the adherend or to reattach the pressure-sensitive adhesive tape. In that case, there is also an effect of reducing adhesive residue on the adherend due to fracture of the laminate.

Specific examples of the layer structure of the foam laminate are shown in Figs. 1 and 2. As shown in Fig. 1, the foam laminate 10 may have a surface resin layer 12 on only one side of a core layer 11, or as shown in Fig. 2, the foam laminate 10 may have surface resin layers 12 and 12 on both sides of the core layer 11, respectively. From the viewpoint of reducing adhesive residues easily in reworking, it is preferable to have surface resin layers 12 and 12 on both sides of the core layer 11, respectively.

When the foam laminate of the present invention has a core layer 11 and a surface resin layer 12 and the core layer 11 is a foam, the foam laminate can have a tensile strength over a certain level while retaining flexibility. Therefore, the foam laminate of the present invention can be removed from the adherend by the method including sticking a pressure-sensitive adhesive tape made of the foam laminate to an adherend, tearing subsequently its core layer in the plane direction, which is so-called "cleaving", and then ripping off the remaining tape from the adherend. Thereby, an adhesive residue during reworking can be reduced.

### <Static friction coefficient>

The foam laminate of the present invention has a static friction coefficient of 0.64 or less. With a static friction coefficient of more than 0.64, as described below, even by blending a silicone compound into the surface resin layer, insufficient slipperiness is obtained. In that case, the resulting foam laminate applied to a foldable type for use in a folded state may slide against a display panel or the like in some cases. At that time, the resistance increases to cause hooking, which may cause problems. For example, in the case where the surface opposite to the sliding surface is adhered to an adherend through a pressure-sensitive adhesive layer, the pressure-sensitive adhesive layer may peel off.

Also, due to insufficient slipperiness, in the case where foam laminates are stacked, the foam laminates may stick to each other. Therefore, the foam laminates stacked in production, for example, in punching, may cause difficulty in peeling the foam laminates from each other after punching, which results in poor productivity in some cases. Furthermore,

in the case where the foam laminate is rolled or in the case where the pressure-sensitive adhesive tape described below is rolled, blocking tends to occur.

The static friction coefficient of the foam laminate is preferably 0.6 or less, more preferably 0.55 or less, and still more preferably 0.4 or less, from the viewpoint of enhancing slidability in the case where the foam laminate is folded for use, and from the viewpoint of enhancing productivity. The static friction coefficient of the foam laminate is not particularly limited, preferably 0.1 or more, more preferably 0.2 or more, and still more preferably 0.25 or more. With a static friction coefficient of the foam laminate controlled to a certain value or more, problems such as reduced workability due to excessively high slipperiness are less likely to occur.

Any one of surfaces 10A and 10A of the foam laminate 10 (refer to Figs. 1 and 2) may have a static friction coefficient in the range as described above, and it is preferable that both surfaces 10A and 10A of the foam laminate have a static friction coefficient in the range described above. Also, the foam laminate may include a surface resin layer of which surface has a static friction coefficient in the range as described above. Therefore, it is particularly preferable that the foam laminate includes a surface resin layer on both sides of the foam laminate, having a static friction coefficient in the range as described above.

The static friction coefficient of the foam laminate may be appropriately adjusted depending on the composition of the surface resin layer and the surface condition of the surface resin layer.

<Tensile strength>

It is preferable that a foam laminate have a tensile strength of 1.5 to 9 MPa. With a tensile strength of 1.5 MPa or more, when the foam laminate made into a pressure-sensitive adhesive tape is peeled off from an adherend together with a pressure-sensitive adhesive material, the foam laminate is fractured and is further prevented from leaving adhesive residue on the adherend, so that better reworkability can be obtained. Furthermore, with a tensile strength of 9 MPa or less, the foam laminate can be easily torn in the plane direction by cleaving, so that excellent reworkability tends to be obtained. Furthermore, with a tensile strength within the above range, good flexibility and mechanical strength are obtained, so that step tracking properties and impact absorption properties can also be easily enhanced. The foam laminate has a tensile strength of more preferably 1.5 to 8.5 MPa, still more preferably 1.6 to 5 MPa.

<25% Compression strength>

The foam laminate of the present invention preferably has a 25% compression strength of 30 to 800 kPa. With a 25% compression strength within the above range, the foam laminate has good flexibility and mechanical strength, so that good step tracking properties, impact absorption properties, etc. can be achieved easily. The 25% compression strength is more preferably 40 to 400 kPa, and still more preferably 50 to 200 kPa.

<Thickness>

The foam laminate preferably has a total thickness of 0.8 mm or less. With the thickness of 0.8 mm or less, the foam laminate can be suitably used inside a thin electronic device or the like. The foam laminate has a total thickness of preferably 0.5 mm or less, more preferably 0.3 mm or less. The foam laminate having a smaller thickness has a reduced difference between the inner and outer circumferences when wound into a roll, so that horizontal wrinkles hardly occur, resulting in enhanced productivity.

The foam laminate has a total thickness of preferably 0.05 mm or more. With a total thickness of 0.05 mm or more, a sufficient gap for cutting into the foam laminate with a cutter or the like can be secured, and tearing in the plane direction can be achieved by cleaving, so that reworkability can be enhanced. Further, a certain degree of flexibility and mechanical strength can be easily imparted to the foam laminate. The foam laminate has a total thickness of more preferably 0.07 mm or more, and still more preferably 0.12 mm or more.

<Glossiness>

The surface of the foam laminate has a glossiness of preferably 50% or more. With a glossiness of 50% or more, a shiny appearance can be sufficiently exhibited by the silicone compound, and the slipperiness of surface can be easily secured. From the viewpoint of slipperiness, the glossiness of the surface of the foam laminate of the present invention is more preferably 52% or more, still more preferably 54% or more. The glossiness is, for example, 100% or less, preferably 80% or less, though not particularly limited.

The glossiness is a value measured at an incidence angle of 60° based on JIS Z 8741.

The foam laminate may include a surface provided with the surface resin layer having a glossiness described above, and the surface of the foam laminate having a specific static friction coefficient described above may have a

glossiness described above. Therefore, it is particularly preferred that the foam laminate have a surface resin layer provided on both sides of the foam laminate, and that both surfaces of the surface resin layers have a glossiness described above.

[Core layer]

The core layer in the foam laminate is a resin foam. Examples of the resin configuring the core layer include a polyolefin-based resin, a urethane-based resin, an acrylic-based resin, and an elastomer-based resin. The resin used in the core layer may be alone or in combination of two or more types. The resin used in the core layer is preferably a polyolefin-based resin among those described above. With use of a polyolefin-based resin in the core layer, the flexibility and mechanical strength can be enhanced, and the step tracking properties, impact absorption properties, etc. tend to be enhanced.

(Polyolefin-based resin)

Examples of the polyolefin-based resin include a polyethylene resin, a polypropylene resin, and an ethylene-vinyl acetate copolymer, and among these, a polyethylene resin is preferred. With use of a polyethylene resin, flexibility is easily imparted to the foam laminate. Examples of the polyethylene resin include a polyethylene resin polymerized with a polymerization catalyst such as a Ziegler-Natta compound, a metallocene compound, and a chromium oxide compound, and among these, a polyethylene resin polymerized with a metallocene compound as polymerization catalyst is preferred.

Examples of the polyethylene resin used in the core layer include a low-density polyethylene (density: less than 0.930 g/cm$^3$), a medium-density polyethylene (density: 0.930 g/cm$^3$ or more and less than 0.942 g/cm$^3$), a high-density polyethylene (density: 0.942 g/cm$^3$ or more), and a linear low-density polyethylene. Among these, a linear low-density polyethylene is preferred, and a linear low-density polyethylene polymerized with a polymerization catalyst of metallocene compound is more preferred. The use of linear low-density polyethylene can impart high flexibility to the foam laminate and also allows the foam laminate to be made thinner easily.

It is preferable that the linear low-density polyethylene be obtained by copolymerizing ethylene (for example, 75 mass% or more, preferably 90 mass% or more, relative to the total amount of monomers) with a small amount of an $\alpha$-olefin on an as-needed basis. Specific examples of the $\alpha$-olefin include propylene, 1-butene, 1-pentene, 4-methyl-1-pentene, 1-hexene, 1-heptene, and 1-octene, and among these, an $\alpha$-olefin having 4 to 10 carbon atoms is preferred.

The density of the linear low-density polyethylene is preferably 0.870 to 0.910 g/cm$^3$, more preferably 0.875 to 0.907 g/cm$^3$, and still more preferably 0.880 to 0.905 g/cm$^3$. As the polyethylene resin, a plurality of polyethylene resins may be used, and a polyethylene resin having a density outside the above range may be added.

(Metallocene compound)

Examples of the metallocene compound include compounds such as bis(cyclopentadienyl) metal complexes having a structure in which a transition metal is sandwiched between $\pi$-electron-based unsaturated compounds. More specifically, examples of the compounds include compounds in which one or more cyclopentadienyl rings or analogs thereof exist as ligands on a tetravalent transition metal such as titanium, zirconium, nickel, palladium, hafnium, or platinum.

Such metallocene compounds have active sites with uniform properties, and each active site has the same activity. Polymers synthesized from the metallocene compound have high uniformity in molecular weight, molecular weight distribution, composition, composition distribution, etc., so that when a sheet containing a polymer synthesized under the metallocene compound is crosslinked, crosslinking proceeds uniformly. The uniformly crosslinked sheet foams uniformly, so that physical properties thereof tend to be stabilized. Further, since the sheet can be stretched uniformly, the thickness of the foam laminate can be made uniform.

Examples of the ligand include a cyclopentadienyl ring and an indenyl ring. These cyclic compounds may be substituted with a hydrocarbon group, a substituted hydrocarbon group, or a hydrocarbon-substituted metalloid group. Examples of the hydrocarbon group include a methyl group, an ethyl group, various propyl groups, various butyl groups, various amyl groups, various hexyl groups, a 2-ethylhexyl group, various heptyl groups, various octyl groups, various nonyl groups, various decyl groups, various cetyl groups, and a phenyl group. Here, "various" refers to various isomers including n-, sec-, tert-, and iso-isomers.

Alternatively, a compound obtained by polymerizing a cyclic compound as an oligomer may be used as the ligand.

Furthermore, in addition to the $\pi$-electron-based unsaturated compounds, monovalent anion ligands such as chlorine and bromine or divalent anion chelate ligands, hydrocarbons, alkoxides, arylamides, aryloxides, amides, arylamides, phosphides, arylphosphides, etc., may be used.

Examples of the metallocene compounds containing a tetravalent transition metal and a ligand include cyclopentadienyl titanium tris(dimethyl amide), methylcyclopentadienyl titanium tris(dimethyl amide), bis(cyclopentadienyl)titanium dichloride, and dimethyl silyl tetramethyl cyclopentadienyl-t-butyl amide zirconium dichloride.

The metallocene compounds combined with a specific cocatalyst (promoter) exhibit an effect as catalyst during polymerization of various olefins. Specific examples of the cocatalyst include methyl aluminoxane (MAO) and boron-based compounds. The molar ratio of the cocatalyst to the metallocene compound is preferably 10 to 1000000, and more preferably 50 to 5000.

In the case of using a linear low-density polyethylene as the polyolefin-based resin in the core layer, the linear low-density polyethylene may be used alone, or in combination with other polyolefin-based resins other than the linear low-density polyethylene, for example, in combination with a polyethylene resin other than linear low-density polyethylene, or in combination with a polyolefin-based resin other than a polyethylene resin. The content of linear low-density polyethylene in the core layer is preferably 60 to 100 mass%, more preferably 70 to 100 mass%, and still more preferably 80 to 100 mass%, based on the total amount of polyolefin-based resin.

Examples of the ethylene-vinyl acetate copolymer used as polyolefin-based resin include an ethylene-vinyl acetate copolymer containing 50 mass% or more of ethylene.

Examples of the polypropylene resin include homopolypropylene and a propylene-$\alpha$-olefin copolymer containing propylene in an amount of preferably 75 mass% or more, more preferably 90 mass% or more. These may be used alone or in combination of two or more types.

Specific examples of the $\alpha$-olefin configuring the propylene-$\alpha$-olefin copolymer include ethylene, 1-butene, 1-pentene, 4-methyl-1-pentene, 1-hexene, 1-heptene, and 1-octene. Among these, an $\alpha$-olefin having 6 to 12 carbon atoms is preferred.

In the case of using a polyolefin-based resin in the core layer, the resin contained in the core layer may be the polyolefin-based resin alone, or may contain a resin other than the polyolefin-based resin. As the resin other than the polyolefin-based resin used in combination with the polyolefin-based resin, a resin other than the polyolefin-based resin among the above-mentioned resins may be used, and an elastomer-based resin is preferably used.

The content of the polyolefin-based resin in the core layer is preferably 60 mass% or more, more preferably 70 mass% or more, and still more preferably 80 mass% or more, based on the total amount of the core layer. The content of the polyolefin-based resin in the core layer may be 100 mass% or less, and in order to allow other additives to be blended in a certain amount or more, the content is preferably 99.9 mass% or less, and may be 99.5 mass% or less.

<Foaming agent>

The foam configuring the core layer is preferably obtained by foaming of an expandable composition containing the above-mentioned resin and a foaming agent. The foam obtained by foaming includes a matrix resin including a resin alone or a resin blended with an additive on an as-needed basis, in which many air bubble cells are contained.

Examples of the foaming agent include a thermally decomposable foaming agent. As the thermally decomposable foaming agent, an organic foaming agent or an inorganic foaming agent may be used. The thermally decomposable foaming agent for use usually has a decomposition temperature higher than the melting temperature of the resin. For example, a thermally decomposable foaming agent having a decomposition temperature of 140 to 270°C may be used.

Specific examples of the organic foaming agents include azo compounds such as azodicarbonamide, metal azodicarboxylates (barium azodicarboxylate, etc.), and azo bisiso butyronitrile, nitroso compounds such as N,N'-dinitroso pentamethylene tetramine, hydrazine derivatives such as hydrazo dicarbonamide, 4,4'-oxybis(benzenesulfonyl hydrazide), and toluene sulfonyl hydrazide, and semicarbazide compounds such as toluene sulfonyl semicarbazide.

Examples of the inorganic foaming agents include ammonium carbonate, sodium carbonate, ammonium hydrogen carbonate, sodium hydrogen carbonate, ammonium nitrite, sodium borohydride, and anhydrous monosodium citrate.

Among these, from the viewpoint of obtaining fine bubbles, and from the viewpoints of economy and safety, azo compounds are preferred, and azodicarbonamide is particularly preferred. These thermally decomposable foaming agents may be used alone or in combination of two or more.

The amount of the thermally decomposable foaming agent in the expandable composition is preferably 0.5 to 20 parts by mass, more preferably 1 to 15 parts by mass, and still more preferably 2 to 10 parts by mass, relative to 100 parts by mass of the resin.

In the case of using a polyolefin-based resin, an acrylic-based resin, or an elastomer-based resin as the resin, it is preferable that the above-mentioned thermally decomposable foaming agent be used as the foaming agent. However, foaming agents other than the thermally decomposable foaming agents may also be used as the foaming agent. For example, in the case of using a urethane-based resin, it is preferable that water, an organic halogen compound, etc. be used as the foaming agent. Examples of the organic halogen compound include organic chlorine compounds and organic

fluorine compounds, and organic fluorine compounds are preferred. Examples of the organic fluorine compounds include hydrofluorocarbons (HFC) and hydrofluoroolefins (HFO), which may further contain a chlorine atom.

Alternatively, a physical foaming agent may be used as the foaming agent. It is preferable that a high-pressure inert gas be used as the physical foaming agent. The inert gas is not particularly limited as long as it is inert to the resin composition and the resin composition can be impregnated with it. Examples of the inert gas include carbon dioxide, butane gas, nitrogen gas, and air. These gases may be mixed for use. Among these, carbon dioxide and butane gas are preferred from the viewpoint of easily increasing an expansion ratio of the foam. It is preferable that the inert gas for impregnation be in a supercritical or subcritical state.

<Other additives>

The foam or expandable composition may contain additives that are generally used in foams, such as antioxidants, heat stabilizers, colorants, flame retardants, antistatic agents, fillers, and decomposition temperature adjustors, on an as-needed basis. Among these, it is preferable that antioxidants and decomposition temperature adjustors be used.

Specific examples of the decomposition temperature adjustors include zinc oxide, zinc stearate, and urea. The content of the decomposition temperature adjustor is preferably 0.01 to 5 parts by mass, more preferably 0.1 to 3 parts by mass, relative to 100 parts by mass of the resin.

Examples of the antioxidant include phenol-based antioxidants such as 2,6-di-t-butyl-p-cresol, sulfur-based antioxidants, phosphorus-based antioxidants, and amine-based antioxidants. The content of the antioxidant is, for example, 0.01 to 5 parts by mass relative to 100 parts by mass of the resin.

<Expansion ratio>

The foam of the core layer has an expansion ratio of preferably 4 to 20 $cm^3/g$, more preferably 5 to 15 $cm^3/g$, and still more preferably 6 to 13 $cm^3/g$. With an expansion ratio equal to or more than the lower limit, the breaking strength of the foam laminate is reduced, so that the core layer is easily torn in the plane direction before peeling of the foam laminate, which enhances reworkability. Further, the foam laminate becomes flexible, so that excellent step tracking properties and impact absorption properties can be easily imparted.

With an expansion ratio equal to or less than the upper limit, a certain tensile strength is imparted to the foam laminate, and tearing during peeling for rework can be prevented. Further, various mechanical strengths are enhanced, and impact absorption properties or the like tends to be enhanced. Also, the air bubble diameter equal to or less than a certain value is easily obtained, so that, for example, the penetration of the pressure-sensitive adhesive into the air bubbles of the core layer can be prevented easily, even if a pressure-sensitive adhesive layer is directly laminated on a core layer in production of the pressure-sensitive adhesive tape to be described later.

<Closed cell ratio>

The core layer has a closed cell ratio of preferably 70% or more, more preferably 80% or more, and still more preferably 90% or more. The upper limit of the closed cell ratio is 100%, though not particularly limited. With a closed cell ratio equal to or more than the above lower limit, excellent step tracking properties and impact absorption properties can be imparted easily. Also, the shear strength of the core layer is increased, so that defects such as cracks occurring in the core layer during use can be prevented.

The closed cell ratio can be measured according to the method of ASTM D2856 (1998).

Specifically, the measurement may be performed as follows.

First, a square planar test piece having a side length of 5 cm is cut out from the foam. The thickness of the test piece is then measured to calculate the apparent volume $V_1$ of the test piece, and the weight $W_1$ of the test piece is also measured.

Subsequently, the volume $V_2$ occupied by air bubbles is calculated based on the following formula, wherein the density of the matrix resin configuring the test piece is $\rho$ ($g/cm^3$).

$$\text{Volume occupied by air bubbles } V_2 = V_1 - W_1/\rho$$

Subsequently, the test piece is submerged in distilled water at 23°C to a depth of 100 mm from the surface of water, and a pressure of 15 kPa is applied to the test piece for 3 minutes. Then, the applied pressure is released in the water, and the test piece is left to stand for 1 minute. The test piece is then taken out from the water and the moisture adhering to the surface of the test piece is removed, and the weight $W_2$ of the test piece is measured. The open cell ratio $F_1$ and closed

cell ratio $F_2$ are calculated based on the following formula.

$$\text{Open cell ratio } F_1 (\%) = 100 \times (W_2 - W_1)/V_2$$

$$\text{Closed cell ratio } F_2 (\%) = 100 - F_1$$

<Degree of crosslinking>

The core layer is preferably a crosslinked foam. The degree of crosslinking of the core layer is preferably 10 to 70 mass%, more preferably 20 to 60 mass%, and still more preferably 25 to 55 mass%. With a degree of crosslinking of the core layer in the above range, the mechanical strength, flexibility, impact absorption properties, etc. of the foam laminate tend to be enhanced. Also, appropriate foaming in the core layer can be achieved. The method for measuring the degree of crosslinking is as follows.

About 100 mg of a test piece is taken from the foam, and the weight A (mg) of the test piece is precisely weighed. Subsequently, the test piece is immersed in 30 $cm^3$ of xylene at 120°C and left standing for 24 hours. Filtering through a 200-mesh wire net is then performed to collect an insoluble matter on the wire net. The insoluble matter is then vacuum-dried, and precisely weighed to obtain the weight B (mg) of the insoluble matter. From the resulting value, the degree of crosslinking (mass%) is calculated by using the following formula.

$$\text{Degree of crosslinking (mass\%)} = 100 \times (B/A)$$

The thickness of the core layer is preferably 0.05 mm or more, more preferably 0.1 mm or more, and still more preferably 0.12 mm or more. With a thickness of the core layer equal to or more than the above lower limit, a sufficient gap for cutting into the foam laminate with a cutter or the like can be secured, and tearing in the plane direction can be achieved by cleaving, so that reworkability can be enhanced. Further, an appropriate flexibility can be easily imparted to the foam laminate. The thickness of the core layer is preferably 0.7 mm or less, more preferably 0.4 mm or less, and still more preferably 0.25 mm or less. With a thickness of the core layer equal to or less than the above upper limit, the thickness of the whole foam laminate can be made thin, which allows the foam laminate to be suitably used inside a thin electronic device or the like.

The core layer may be formed by slicing as described below, and in that case, the surface of the core layer may be a sliced surface formed by slicing. The sliced surface is usually any surface of the foam laminate. In addition, in the case where the foam laminate is produced by the third production method described below, the thickness of the core layer means the thickness of the core layer after slicing the core layer.

[Surface resin layer]

The surface resin layer may be a foam layer made of foam, or a non-foam layer made of non-foam. In the case where the surface resin layer is a foam layer, the expansion ratio thereof may be lower than that of the foam configuring the core layer. In the present invention, the surface resin layer is preferably a non-foam. By using a non-foam for the surface resin layer, the tensile strength of the foam laminate is enhanced, so that the foam laminate is prevented from breaking during peeling, and excellent reworkability tends to be achieved.

The surface resin layer is preferably laminated directly onto the core layer, or may be laminated through an adhesive layer or the like.

In the present invention, each of the surface resin layer contains a silicone compound. The surface resin layer containing a silicone compound is allowed to have a low static friction coefficient of the surface and enhanced slipperiness. Further, since the sealing property can also be enhanced, in the case where the foam laminate is used inside an electronic device, excellent waterproofing can be exhibited. Furthermore, since the low adhesion can also be enhanced, in the case where the foam laminate is rolled up for storage or transportation, the foam laminate is prevented from sticking to each other, i.e., blocking. Therefore, a process for preventing blocking such as surface treatment is not required for the foam laminate, so that the productivity of the foam laminate can be enhanced. Also, as described below, in the case where a pressure-sensitive adhesive tape with the foam laminate as a substrate is rolled up, blocking is prevented in the same manner.

Also, due to the excellent low adhesion, adhesion of dirt or the like to the surface of the foam laminate, particularly to the surface of the surface resin layer, can be suppressed.

(Silicone compound)

Examples of the silicone compound used in the surface resin layer include a silicone-olefin copolymer and an oxyalkylene silyl compound. The silicone compound may be used alone or in combination of two or more types. As the silicone compound, a silicone-olefin copolymer is preferred. In the case of using a polyolefin-based resin in the surface resin layer, use of a silicone-olefin copolymer allows the compatibility and mixability with the polyolefin-based resin to be enhanced, so that the effect of blending the silicone compound tends to be appropriately exhibited without bleeding of the silicone compound.

<<Silicone-olefin copolymer>>

The silicone-olefin copolymer is a copolymer of silicone (a polymer compound having a siloxane bond) and an olefin or polyolefin, and a copolymer of silicone and a polyolefin is preferred.

More specifically, the copolymer has a structural unit derived from a hydrosilane compound containing one or more structural units represented by the following general formula (1) and a structural unit derived from a polyolefin containing a terminal vinyl group.

The silicone-olefin copolymer contains an -Si-C-C- structure resulting from a reaction between -Si-H in a hydrosilane compound and the vinyl group in a terminal vinyl group-containing polyolefin. The polymerization form of the copolymer between the hydrosilane compound and the terminal vinyl group-containing polyolefin is not particularly limited, and may be any of a random copolymer, a block copolymer, and a graft copolymer, among which a block copolymer is preferred.

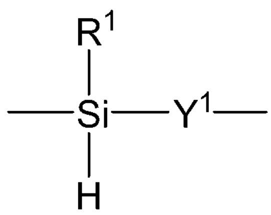

(1)

In the formula (1), $R^1$ represents a hydrogen atom, a halogen atom, a hydrocarbon group, an oxygen-containing group, or a silicon-containing group, and any of the hydrocarbon group, the oxygen-containing group, and the silicon-containing group may contain one or more heteroatoms; $Y^1$ represents O, S, or NR, wherein R represents a hydrogen atom or a hydrocarbon group.

Examples of the halogen atom in $R^1$ include fluorine, chlorine, bromine, and iodine.

Examples of the hydrocarbon group include an alkyl group, an alkenyl group, and an aryl group. The hydrocarbon group has, for example, about 1 to 18 carbon atoms, and preferably 1 to 10 carbon atoms.

Examples of the alkyl group include a linear or branched alkyl group such as a methyl group, an ethyl group, an n-propyl group, an isopropyl group, an n-butyl group, an isobutyl group, a tert-butyl group, a hexyl group, a 2-ethylhexyl group, an octyl group, a decyl group, and an octadecyl group; a cycloalkyl group such as a cyclopentyl group, a cyclohexyl group, and a norbornyl group; and an arylalkyl group such as a benzyl group, a phenylethyl group, and a phenylpropyl group.

Examples of the alkenyl group include a vinyl group, a propenyl group, and a cyclohexenyl group. Examples of the aryl group include a phenyl group, a tolyl group, a dimethylphenyl group, a trimethylphenyl group, an ethylphenyl group, a propylphenyl group, a biphenyl group, a naphthyl group, a methyl naphthyl group, an anthryl group, and a phenanthryl group.

The oxygen-containing group is an organic group that contains oxygen, and has, for example, about 1 to 18 carbon atoms, preferably 1 to 10 carbon atoms. The oxygen-containing group may usually have one oxygen atom, and may have two or more. Examples of the oxygen-containing group include an alkoxy group and an aryloxy group. Examples of the alkoxy group include a methoxy group, an ethoxy group, a propoxy group, a butoxy group, a hexyloxy group, an octyloxy group, a benzyloxy group, and a 2-phenylethoxy group. Examples of the aryloxy group include a phenoxy group, a tolyloxy group, a biphenyloxy group, and a naphthyloxy group.

The silicon-containing group is an organic group that contains silicon, and examples thereof include an alkyl silyl group, an alkenyl silyl group, an aryl silyl group, an alkyl siloxy group, an alkenyl siloxy group, an aryl siloxy group, an alkoxy silyl group, an aryloxy silyl group, an alkoxy siloxy group, an aryloxy siloxy group, and a polysiloxyl group. The polysiloxyl group is a group having two or more siloxane repeating units, and may be linear or branched. The polysiloxyl group preferably has 1 to 50 silicon atoms.

The above-mentioned hydrocarbon group, oxygen-containing group, and silicon-containing group may contain

one or more heteroatoms. Specifically, these groups include groups in which at least one hydrogen atom is substituted with a group containing a halogen atom, oxygen, nitrogen, silicon, phosphorus, or sulfur.

Among the atoms or groups listed for $R^1$ in the formula (1), it is preferable that the $R^1$ be one or more atoms or groups selected from the group consisting of a hydrogen atom, a halogen atom, a polysiloxyl group having 1 to 50 silicon atoms, an alkoxy group having 1 to 4 carbon atoms, and a phenyl group, and that at least one of the $R^1$ in the hydrosilane compound be a polysiloxyl group having 1 to 50 silicon atoms.

As the hydrosilane compound that contains one or more structural units represented by the general formula (1), those having a plurality of Si-H bonds as represented by the following general formula (2) or (3) are preferably used.

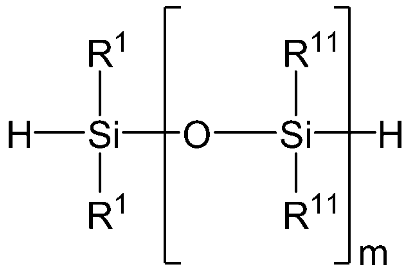

(2)

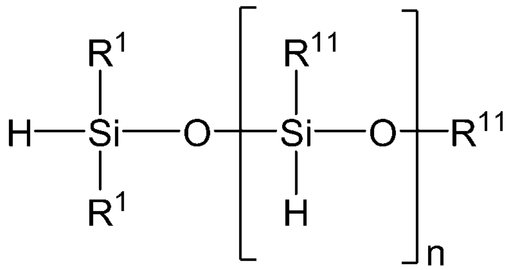

(3)

In the above general formulas (2) and (3), $R^1$ is the same group as $R^1$ in the structural unit represented by the general formula (1). $R^{11}$ is one or more atoms or groups selected from the group consisting of a hydrogen atom, a halogen atom, a silicon-containing group having 1 to 10 silicon atoms, an alkoxy group having 1 to 4 carbon atoms, a phenyl group, and an alkyl group, and is preferably a silicon-containing group having 1 to 10 silicon atoms, an alkoxy group having 1 to 4 carbon atoms, a phenyl group, or an alkyl group having 1 to 4 carbon atoms. Furthermore, m is a number from 1 to 500, and n is a number from 1 to 50. The halogen atom, silicon-containing group, alkoxy group, and alkyl group may be the same as those exemplified for $R^1$ in the formula (1).

As the hydrosilane compound containing one or more structural units represented by the general formula (1), a compound represented by the following general formula (4) is particularly preferred.

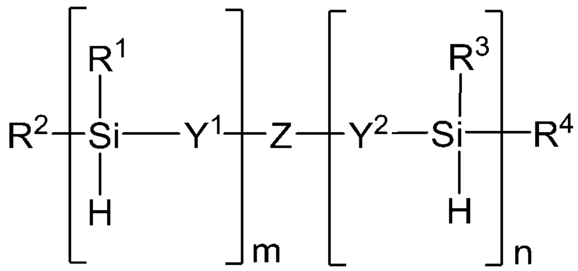

(4)

In the formula (4), $R^1$ and $R^3$ represent a hydrogen atom, a halogen atom, a hydrocarbon group, an oxygen-containing group, or a silicon-containing group, and may be the same or different from each other; in the case where there exists a plurality of $R^1$ and $R^3$, they may be the same or different from each other; $R^2$ and $R^4$ represent a hydrogen atom, a halogen atom, a hydrocarbon group, an oxygen-containing group, or a group represented by the general formula (5), and may be the same or different from each other; $Y^1$ and $Y^2$ represent O, S, or NR, wherein R represents a hydrogen atom or a hydrocarbon group, and may be the same or different from each other; in the case where there exist a plurality of $Y^1$ and $Y^2$, they may be the same or different from each other; m is an integer of 1 to 20, n is an integer of 0 to 20; Z represents a divalent linking group represented by the general formula (6) in the case where n is 1 or more, and represents a direct bond between $Y^1$ and $R^4$ in the case where n is 0.

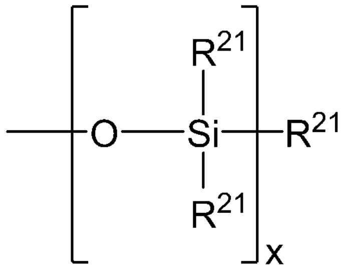

(5)

In the formula (5), $R^{21}$ represents a hydrogen atom, a halogen atom or a hydrocarbon group, and a plurality of $R^{21}$ may be the same or different from each other; x is an integer of 0 to 10.

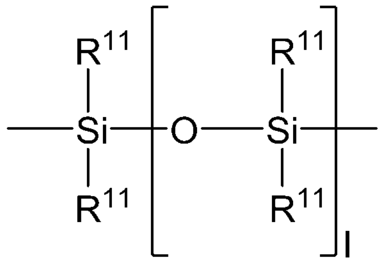

(6)

In the formula (6), $R^{11}$ represents a hydrogen atom, a halogen atom or a hydrocarbon group, and a plurality of $R^{11}$ may be the same or different; 1 is an integer of 0 to 500.

In the general formulas (4), (5) and (6), the halogen atom, hydrocarbon group, oxygen-containing group, and silicon-containing group are the same as those exemplified for $R^1$ in the formula (1).

The polyolefin used for the silicone-olefin copolymer contains one or more terminal vinyl groups at an end as described above. The structure of the polyolefin excluding the vinyl group is preferably an ethylene homopolymer chain, a propylene homopolymer chain, or a copolymer chain of two or more olefins selected from the group consisting of ethylene, propylene, butene, vinyl norbornene, a cyclic polyene having two or more double bonds, and a linear polyene having two or more double bonds. Among these, it is preferable that the polyolefin contain a polymer chain derived from ethylene, and specifically, an ethylene homopolymer chain, a copolymer chain of ethylene and propylene, and a copolymer chain of ethylene and norbornene are preferred.

The silicone-olefin copolymer can be synthesized by a known method. The proportion of the structural unit derived from the formula (1) in the silicone-olefin copolymer is not particularly limited as long as intended functions of the silicone-olefin copolymer are exhibited, being usually 5 to 99 mass%, and preferably 10 to 95 mass%.

As the silicone-olefin copolymer, a commercially available copolymer may be used, or a produced one may be used. Examples of the commercially available products include "Exfola (registered trademark)" (manufactured by Mitsui Fine Chemicals, Inc., product name).

Alternatively, as the silicone-olefin copolymer, a partially crosslinked product of dimethyl vinylpolysiloxane having a vinyl group content of 0 to 1 mol% and EPDM (ethylene-propylene rubber) having an unsaturated group content of 0 to 5 mass%, SBS (styrene-butadiene-styrene block copolymer), or SIS (styrene-isoprene block copolymer), or a reaction product between amino-modified silicone or carboxyl-modified silicone and a maleic anhydride-modified olefin polymer or oligomer, including polypropylene, polyethylene, ethylene-propylene copolymer, etc., may be used.

Alternatively, the silicone-olefin copolymer may be mixed with a resin other than a silicone compound to form a masterbatch for use. The form of the masterbatch is not particularly limited, and pellets or the like may be used. The resin other than the silicone compound used in the masterbatch may be, for example, a polyolefin-based resin, and the details thereof are described as follows.

(Oxyalkylene silyl compound)

Examples of the oxyalkylene silyl compound include a compound having a polyoxyalkylene structure and a silicon-containing group. Examples of the polyoxyalkylene include polyoxyethylene, polyoxypropylene, polyoxybutylene, polyoxytetramethylene, a polyoxyethylene-polyoxypropylene copolymer, and a polyoxypropylene-polyoxybutylene copolymer. Among these, polyoxyethylene is preferred.

As the silicon-containing group, an alkoxy silyl group is preferred. Alternatively, the silicon-containing group may be a group generated by reacting an alkoxy silyl group with a hydroxyl group. The alkoxy silyl group is preferably a group represented by the following general formula (7).

$$-Si(R^{21})_{3-a}(OR^{22})_a \qquad (7)$$

In the general formula (7), $R^{21}$ are each independently an alkyl group having 1 to 4 carbon atoms, $R^{22}$ are each independently an alkyl group having 1 to 4 carbon atoms, and a is an integer from 1 to 3. $R^{21}$ is preferably a methyl group or an ethyl group, and more preferably a methyl group. $R^{22}$ is preferably a methyl group or an ethyl group, and more preferably a methyl group. In addition, a is 1 to 3, preferably 3.

The oxyalkylene silyl compound preferably has a polyoxyalkylene structure in the main chain and an alkoxy silyl group at least in one of the terminal or side chain, and more preferably has an alkoxy silyl group at the terminal.

The oxyalkylene silyl compound can be obtained through a silylation reaction using a polyoxyalkylene compound and an alkoxy silyl compound as starting materials.

Examples of the polyoxyalkylene compound include polyethylene glycol, polyethylene glycol monocetyl ether, polyethylene glycol monododecyl ether, polyethylene glycol monooleyl ether, polyethylene glycol monolaurate, polyethylene glycol monostearate, polyethylene glycol monooctyl phenyl ether, polyethylene glycol monononyl phenyl ether, and polypropylene glycol.

Examples of the alkoxy silyl compound include tetramethoxy silane, tetraethoxy silane, tetrapropoxy silane, tetra-n-butoxy silane, methyl trimethoxy silane, methyl triethoxy silane, dimethyl dimethoxy silane, dimethyl diethoxy silane, trimethyl methoxy silane, trimethyl ethoxy silane, methylphenyl dimethoxy silane, diphenyl dimethoxy silane, phenyl trimethoxy silane, phenyl triethoxy silane, triphenyl methoxy silane, methyl-2-(3-cyclohexenyl)dimethoxy silane, methyl cyclohexyl ethoxy silane, n-propyl trimethoxy silane, trimethoxy silyl phenoxide, trimethoxy silyl nonyl phenoxide, trimethoxy silyl(1-methyl-1-phenylethyl)phenoxide, and 1,6-bis(trimethoxy silyl)hexane.

The content of the silicone compound in each surface resin layer is preferably 1 to 40 mass%, based on the total amount of each surface resin layer. With a content of 1 mass% or more of the silicone compound, the effect of blending is easily achieved. Also, with a content of 40 mass% or less, decrease in various physical properties such as tensile elongation is prevented. Therefore, for example, breakage during a production process can be prevented. The content of the silicone compound is more preferably 2 to 25 mass%, still more preferably 4 to 15 mass%.

[Resin other than silicone compound]

The surface resin layer contains a resin other than a silicone compound. Examples of the resin other than a silicone compound include a polyolefin-based resin, a urethane-based resin, an acrylic-based resin, and an elastomer-based resin, and among these, a polyolefin-based resin is preferably used. With use of a polyolefin-based resin, the silicone compound can be appropriately mixed or compatible with the surface resin layer.

Examples of the polyolefin-based resin used for the surface resin layer also include an acid-modified polyolefin-based resin in addition to the polyolefin-based resin described in the core layer. The detailed description of the polyolefin-based resin other than the acid-modified polyolefin-based resin is omitted because it is the same as that of the core layer.

Examples of the acid-modified polyolefin-based resin includes a modified polyolefin-based resin that is acid-modified with at least one of an unsaturated carboxylic acid and an anhydride thereof. Specifically, the acid-modified polyolefin-based resin is a polyolefin-based resin to which an unsaturated carboxylic acid or the like is chemically bonded by an addition reaction, graft reaction, etc. In the acid-modified polyolefin-based resin, examples of the unsaturated carboxylic acid that modifies the polyolefin-based resin include acrylic acid, methacrylic acid, maleic acid, fumaric acid, itaconic acid, and anhydrides thereof.

Examples of the polyolefin-based resin used for the acid-modified polyolefin-based resin include homopolymers or copolymers of $\alpha$-olefins having about 2 to 12 carbon atoms, such as ethylene, propylene, butene, and methylpentene-1. Among these, a polyethylene-based resin and a polypropylene-based resin are preferred, and in particular, a polyethylene-based resin is preferred. Therefore, the acid-modified polyolefin-based resin is preferably an acid-modified polyethylene-based resin. Also, the acid-modified polyolefin-based resin may contain a structural unit derived from components other than olefins and unsaturated carboxylic acids or anhydrides thereof, and may contain a structural unit derived from vinyl acetate or various (meth)acrylates.

The acid-modified polyolefin-based resin may be mainly composed of a structural unit derived from an olefin, and may contain, for example, 50 mass% or more, preferably 60 mass% or more, more preferably 70 mass% or more of olefin relative to the total monomer content. Examples of the acid-modified polyolefin-based resin include one obtained by graft-polymerizing at least one of an unsaturated carboxylic acid and an anhydride thereof on a polyolefin-based resin such as a polyethylene-based resin. Alternatively, examples of the acid-modified polyolefin-based resin include a copolymer of an olefin such as ethylene, an unsaturated carboxylic acid or anhydride thereof such as maleic anhydride, and other components used on an as-needed basis.

Specific examples of preferred acid-modified polyolefin-based resins include a maleic anhydride-modified polyethylene-based resin and a maleic acid-modified polyethylene-based resin.

The acid-modified polyolefin-based resin is preferably used in the case of using an oxyalkylene silyl compound as silicone compound. Although an oxyalkylene silyl compound has low compatibility with an olefin-based resin, use of the acid-modified polyolefin-based resin enhances the compatibility with the polyolefin-based resin, so that the oxyalkylene silyl compound can be appropriately mixed or dispersed in the surface resin layer.

In the case of using an acid-modified polyolefin resin, the polyolefin-based resin used for the surface resin layer may be a combination of an acid-modified polyolefin-based resin and a polyolefin-based resin other than the acid-modified polyolefin-based resins. In the case of using these in combination, the proportion of the acid-modified polyolefin-based resin in the polyolefin-based resin may be, for example, about 1 to 50 mass%, preferably 3 to 40 mass%, and more preferably 5 to 30 mass%.

On the other hand, in the case of using a silicone-olefin copolymer as the silicone compound, any polyolefin-based resin other than an acid-modified polyolefin-based resin may be used.

The polyolefin-based resin used for the surface resin layer is preferably a polyethylene resin, and more preferably a linear low-density polyethylene. Therefore, in the case of using an oxyalkylene silyl compound as the silicone compound, it is preferable that a polyethylene resin and an acid-modified polyolefin-based resin be used in combination as the polyolefin-based resin. On the other hand, in the case of using a silicone-olefin copolymer as the silicone compound, it is preferable that a polyethylene resin be used alone as the polyolefin-based resin.

In the case of using a polyolefin-based resin in the surface resin layer, the content of the polyolefin-based resin in each surface resin layer is preferably 50 to 98 mass% based on each surface resin layer. With a content controlled to 50% or more, the mechanical properties required for a foam laminate such as flexibility, mechanical strength, and elongation tend to be satisfied. Also, with a content controlled to 98 mass% or less, a certain amount or more of other components such as silicone compounds and additives are easily contained in the surface resin layer.

The content of the polyolefin-based resin in each surface resin layer is more preferably 60 to 97 mass%, still more preferably 70 to 95 mass%.

In the case of using a linear low-density polyethylene as the polyolefin-based resin in each surface resin layer, the linear low-density polyethylene may be used alone or in combination with other polyolefin-based resins other than the linear low-density polyethylene, including, for example, in combination with a polyethylene resin other than the linear low-density polyethylene or in combination with a polyolefin-based resin other than polyethylene resin. The content of the linear low-density polyethylene in each surface resin layer is preferably 60 to 100 mass%, more preferably 70 to 100 mass%, and still more preferably 80 to 100 mass%, based on the total content of polyolefin-based resin.

Although the resin used for the core layer and the resin used for the surface resin layer may be different from each other, use of the same type of resins is preferred. Use of the same type of resins allows the adhesive strength between the core layer and the surface resin layer to be increased, so that occurrence of interfacial peeling can be prevented. Accordingly, both the core layer and the surface resin layer are made of preferably polyolefin-based resin, more preferably polyethylene resin, and still more preferably linear low-density polyethylene, in particular.

Alternatively, an additive may be appropriately blended with the resin of the surface resin layer. The additives for use may be the same as those used in the core layer.

The surface resin layer may be a foam as described above, or may be a non-foam. In the case where the surface resin layer is a foam, it is preferable that the foam be obtained by foaming of an expandable composition containing a silicone compound, a resin other than the silicone compound, and a foaming agent. Specific examples of the foaming agent for use preferably include a thermally decomposable foaming agent as described for the core layer. The content of the thermally decomposable foaming agent in the resin composition is not particularly limited as long as the expansion ratio falls within the range described below, being preferably 0.1 to 10 parts by mass, more preferably 0.5 to 8 parts by mass, and still more preferably 0.8 to 5 parts by mass, relative to 100 parts by mass of the total content of the silicone compound and the resin other than the silicone compound.

In the case where the surface resin layer is a foam, the foam configuring each surface resin layer may have an expansion ratio lower than that of the foam configuring the core layer. The specific expansion ratio of the foam configuring each surface resin layer is preferably more than 1 $cm^3$/g and less than 5 $cm^3$/g, more preferably 1.1 to 4 $cm^3$/g, and still more preferably 1.1 to 2 $cm^3$/g. With an expansion ratio of the surface resin layer controlled to a relatively low level, the mechanical strength such as the tensile strength of a foam laminate tends to be enhanced, and the reworkability also tends to be enhanced.

In the case where the surface resin layer is a foam, the closed cell ratio in each surface resin layer is preferably 70% or more, more preferably 80% or more, and still more preferably 90% or more. The upper limit of the closed cell ratio may be 100%, though not particularly limited.

It is preferable that the surface resin layer be made of crosslinked body, and the degree of crosslinking of each surface resin layer is not particularly limited, preferably 10 to 70 mass%, more preferably 20 to 60 mass%, and still more preferably 25 to 55 mass%. With a degree of crosslinking of the surface resin layer controlled in the range, the mechanical strength, flexibility, impact absorption properties, etc. of the foam laminate tend to be enhanced.

<Thickness of surface resin layer>

The thickness of each surface resin layer in the foam laminate is preferably 5 μm or more, more preferably 8 μm or more, and still more preferably 10 μm or more. With a thickness of the surface resin layer equal to or more than the lower limit, the surface resin layer imparts tensile strength to the foam laminate, and when the foam laminate made into a pressure-sensitive adhesive tape is peeled off from an adherend, the foam laminate is prevented from being torn, so that better reworkability can be obtained.
The thickness of the surface resin layer is preferably 200 μm or less, more preferably 80 μm or less. With a thickness of the surface resin layer equal to or less than the upper limit, the thickness of the foam laminate as a whole can be thinned, which allows suitable use in thin electronic devices. Furthermore, when wound into a roll, from the viewpoint of reducing the difference between the inner and outer circumferences to suppress the occurrence of lateral wrinkles, a further reduced thickness of the surface resin layer, for example, a thickness of 30 μm or less, is more preferred.
In the case where the foam laminate has a surface resin layer on both sides of the core layer, the thickness of the surface resin layer means the thickness of each surface resin layer. For example, in the case where the thickness of each surface resin layer is 5 μm or more, any of the surface resin layers has a thickness of 5 μm or more. In the case where the foam laminate has a surface resin layer on both sides of the core layer, it is preferable that the thickness of any of the surface resin layers be in the above range.
In the case where the foam laminate has a surface resin layer on both sides, the both surface resin layers may have the same thickness or different thicknesses, and having the same thickness is preferred.
The ratio of the thickness of the core layer to the thickness of the surface resin layer (thickness of core layer / thickness of each surface resin layer) is, for example, 2.0 or more, preferably 5.0 or more, more preferably 8.0 or more, still more preferably 12.0 or more, and preferably 50 or less, more preferably 30 or less, and still more preferably 20 or less. In the case where the surface resin layers are provided on both sides of the core layer, each ratio may be within the above range.
As long as the foam laminate has a surface resin layer containing a silicone compound on at least one surface, and the static friction coefficient of the surface resin layer is 0.64 or less, the other surface of the foam laminate may have no surface resin layer as described above, and the core layer may configure the other surface of the foam laminate. Alternatively, the other surface of the foam laminate may be configured by a layer other than the surface resin layer (also referred to as the other layer). The other layer is not particularly limited, and may include, for example, a resin layer, a nonwoven fabric, paper such as Japanese traditional paper, and woven or knitted fabric made of natural fibers or synthetic fibers. The other layer may be laminated on the core layer. Among these, use of a resin layer is preferred. In the case where the other layer is configured by resin layer, the resin layer may be a layer containing no silicone compound. In the case where the resin layer is provided, the friction coefficient of the surface of the resin layer is preferably more than 0.64. The details of the resin layer containing no silicone compound are the same as those of the surface resin layer, except that it contains no silicone compound. Accordingly, detailed description thereof is omitted.

[Surface treatment]

The foam laminate may be surface-treated. Through surface treatment, the surface state of the foam laminate changes, so that the static friction coefficient can be adjusted. Preferred examples of the surface treatment include a corona treatment. Through the corona treatment, the foam laminate has enhanced adhesion to an adhesive, so that the adhesive performance or the like of a pressure-sensitive adhesive tape made therefrom is enhanced. The surface treatment may be performed on the surface of the foam laminate on which the surface resin layer is provided.

<Production method of foam laminate>

The foam laminate of the present invention can be produced, for example, by any one of the following first to third production methods, although there is no particular limitation thereto.

(First production method)

The foam laminate of the present invention can be produced, for example, by a method (hereinafter also referred to as "first production method") in which a surface layer to configure a surface resin layer is laminated on one or both sides of a middle layer made of an expandable composition to obtain a laminated sheet, and then the laminated sheet is subjected to foaming, though not limited thereto.
More specifically, the first production method includes the following steps I to II.

(I) A step of obtaining a laminated sheet having a middle layer made of an expandable composition for forming a core

layer, and a surface layer made of a resin composition for forming a surface resin layer formed on one or both sides of the middle layer.

(II) A step of obtaining a foam laminate by foaming at least the middle layer of the laminated sheet.

Each of the steps will be described as follows.

(Step (I))

The method for obtaining the laminated sheet in step (I) is preferably performed by coextrusion molding, though not particularly limited thereto.

Specifically, in the case where surface resin layers are formed on both sides of the middle layer, the silicone compound, the resin other than the silicone compound, and other additives blended on an as-needed basis for forming the surface resin layer are fed to a first and third extruder, respectively, and melt-kneaded to obtain a resin composition for forming the surface resin layer. Also, the resin for forming the core layer, the foaming agent such as a thermally decomposable foaming agent, and additives blended on an as-needed basis are fed to a second extruder, and melt-kneaded to obtain an expandable composition for forming the core layer.

Subsequently, the compositions supplied from the first to third extruders are joined together such that the composition fed from the second extruder forms a middle layer, and extruded into a sheet shape using a T-die or the like to obtain a laminated sheet having a three-layer structure. Alternatively, in the method for obtaining a laminated sheet having a three-layer structure in which both surface resin layers have the same composition, one extruder may be used instead of two extruders (the first and third extruders), such that the resin composition for both surface resin layers may be supplied from the one extruder.

In the case where a surface resin layer is formed on one side of the core layer, each component for forming the surface resin layer is supplied to a first extruder and melt-kneaded to obtain the resin composition for forming the surface resin layer. Also, each component for forming the core layer is fed to a second extruder and melt-kneaded to obtain an expandable composition for forming the core layer. Subsequently, the resin composition fed from the first extruder is merged with the expandable composition fed from the second extruder, and the merged product is extruded into a sheet shape with a T-die or the like to obtain a multilayer laminated sheet having a two-layer structure.

In the coextrusion molding, any of the feed block method or the multi-manifold method may be used, and the feed block method is preferred.

In the method described above, it is preferable that the laminated sheet be further crosslinked after the step (I). As a crosslinking method, although the laminated sheet obtained in the step (I) in which an organic peroxide is blended in advance may be heated to be crosslinked, it is preferable that the laminated sheet be irradiated with ionizing radiation to be crosslinked. Examples of ionizing radiation include electron beams and β rays, and electron beams are preferred.

The dose of ionizing radiation is preferably 1 to 10 Mrad, more preferably 1.5 to 5 Mrad. It is preferable that crosslinking be performed prior to the step (II).

(Step (II))

In the step (II), the laminated sheet obtained in the step (I) is subjected to a foaming step such that at least the middle layer foams. The middle layer may be processed to cause foaming of a foaming agent. In the case where the foaming agent is a thermally decomposable foaming agent, the laminated sheet is heated to cause foaming. The heating temperature may be a temperature at which the thermally decomposable foaming agent is decomposed or higher, and is, for example, about 150 to 320°C.

The method for heating the laminated sheet is not particularly limited, and examples thereof include a method for heating the laminated sheet with hot air, a method for heating with infrared rays, a method for heating in a salt bath, and a method for heating in an oil bath, and these may be used in combination.

The laminated sheet may be appropriately stretched during or after foaming.

In the description described above, the surface resin layer is made of a non-foam as an example. In the case in which the surface resin layer is made of foam, a foaming agent such as thermally decomposable foaming agent may be blended as additive in the resin composition for forming the surface resin layer, and such that the surface layer foams together with the middle layer in the step (II).

(Second production method)

The foam laminate of the present invention may also be produced by another method. Specific examples thereof include a method of producing a foam configuring the core layer in advance, and laminating a resin film or a foam configuring the surface resin layer on one or both sides of the produced foam so as to be bonded together (hereinafter, also

referred to as a "second production method").

In the second production method, it is preferable that the method include melt-kneading of the resin for forming the core layer, the thermally decomposable foaming agent, and additives blended on an as-needed basis to produce an expandable composition for forming the core layer, and molding the produced expandable composition into a sheet shape (expandable composition sheet). It is preferable that the method for molding the melt-kneaded expandable composition into a sheet shape be performed by using an extruder, though not particularly limited.

It is preferable that the resulting expandable composition sheet be further crosslinked before foaming to be described later. Although examples of the method for crosslinking include heating an expandable composition sheet in which an organic peroxide is blended in advance to cause crosslinking, it is preferable that the expandable composition sheet be irradiated with ionizing radiation to cause crosslinking. The type and dose of ionizing radiation are as described in the first production method described above.

The expandable composition sheet may then cause foaming. The expandable composition sheet may be treated such that the foaming agent causes foaming. In the case where the foaming agent is a thermally decomposable foaming agent, the expandable composition sheet is heated to cause foaming. The heating temperature and heating method are as described in the first production method described above. The expandable composition sheet may be appropriately stretched during foaming or after foaming.

Then, the surface layer made of a non-foam (resin film) or foam for configuring the surface resin layer prepared separately is laminated on one or both sides of the foam that configures the core layer to be bonded, so that a foam laminate can be obtained. Specifically, it may be heated and pressurized with a press or the like to cause thermocompression bonding. Alternatively, a pressure sensitive adhesive, a bonding agent or a pressure sensitive adhesive double coated tape may be applied to the adhesive surface between the foam configuring the core layer and the surface layer, so that the layers can be bonded together with the pressure sensitive adhesive, the bonding agent, or the pressure sensitive adhesive double coated tape. The foam for configuring the surface resin layer may be produced in the same manner as for the foam for configuring the core layer, or may be produced in a different manner.

(Third production method)

There exists a further different production method for a foam laminate of the present invention. Specific examples include a method for obtaining a foam laminate having a surface layer provided on one side of the core layer (hereinafter, also referred to as "third production method"), including slicing the core layer of the foam laminate obtained by the first or second production method (hereinafter, referred to as "laminated intermediate" in the third production method) in the plane direction. The method of slicing the core layer is not particularly limited, and may be performed by using a known slicer or the like. In the present production method, the laminated intermediate before slicing is preferably produced by the first production method described above. Also, the laminated intermediate before slicing is preferably one having surface resin layers provided on both sides of the core layer. By slicing such a laminated intermediate, two foam laminates having a surface layer provided on one side of the core layer can be obtained.

In obtaining the laminated intermediate, the thickness of the core layer may be appropriately adjusted, so that a desired thickness of the core layer can be obtained after slicing.

In the third production method described above, a laminated intermediate having a surface resin layer laminated on a core layer is obtained, and the core layer configuring the laminate is sliced to obtain a foam laminate. Alternatively, a foam laminate may be obtained by producing a foam without a surface resin layer laminated thereon, slicing the foam, and laminating a surface resin layer on the sliced foam. In that case, the method for producing the foam and the method of laminating the surface resin layer on the foam are as described in the second production method.

[Pressure-sensitive adhesive tape]

The present invention also provides a pressure-sensitive adhesive tape having the foam laminate as a substrate. The pressure-sensitive adhesive tape is provided with, for example, a pressure-sensitive adhesive material provided on at least one surface of the foam laminate. The pressure-sensitive adhesive tape can be adhered to another member through the pressure-sensitive adhesive material. The pressure-sensitive adhesive tape may include a pressure-sensitive adhesive material provided on both surfaces of the foam laminate, or a pressure-sensitive adhesive material provided on one surface.

The pressure-sensitive adhesive material may be provided on a surface resin layer configuring the foam laminate, or on a surface on which no surface resin layer is provided.

As a specific example of providing a pressure-sensitive adhesive material on the surface resin layer, in the case of using a multi-layer laminate having a surface resin layer on only one side of a foam laminate as a substrate, the pressure-sensitive adhesive material may be provided only on the surface provided with the surface resin layer. With such a configuration, the foam laminate is hardly damaged during peeling of the pressure-sensitive adhesive tape, and peeling is

easily performed without leaving any pressure-sensitive adhesive material on the adherend, so that reworkability is enhanced. Also, in the case where a surface resin layer is provided on both sides of the foam laminate, the pressure-sensitive adhesive material may be provided on only one side of the foam laminate or on both sides. However, it is preferable that the pressure-sensitive adhesive material be provided on one side.

A specific example of providing a pressure-sensitive adhesive material on a surface having no surface resin layer may include using a multilayer laminate having a surface resin layer on only one side of a foam laminate as a substrate, and providing a pressure-sensitive adhesive material on the side opposite to the side on which the surface resin layer is provided.

In the pressure-sensitive adhesive tape having the above-mentioned configuration, one surface is made of surface resin layer, and the other surface is made of a pressure-sensitive adhesive material. Therefore, for example, in the case where the pressure-sensitive adhesive tape is rolled, the surface resin layer and the pressure-sensitive adhesive material come into contact. However, since the surface resin layer has a low friction coefficient and low adhesion, blocking hardly occurs. Therefore, even without a release film on the surface of the pressure-sensitive adhesive material, the tape can be smoothly unwound from the rolled pressure-sensitive adhesive tape. Also, since no release film is provided, wrinkles are unlikely to occur when the pressure-sensitive adhesive tape is rolled, and the unwinding property is also enhanced.

In the case where the pressure-sensitive adhesive material is provided on a surface on which no surface resin layer is provided, the pressure-sensitive adhesive material may be laminated directly on the core layer, or may be laminated through the other layer described above. Among them, from the viewpoint of preventing the pressure-sensitive adhesive configuring the pressure-sensitive adhesive material from penetrating into the air bubbles of the core layer, the pressure-sensitive adhesive material is laminated preferably through another layer, more preferably on a resin layer having a static friction coefficient of more than 0.64, in particular, on a non-foam resin layer. Due to lamination of the pressure-sensitive adhesive material on a resin layer having a static friction coefficient of more than 0.64, the pressure-sensitive adhesive material can be laminated on the foam laminate with high adhesion.

The pressure-sensitive adhesive material may be one having at least a pressure-sensitive adhesive layer, and may be one having a pressure-sensitive adhesive layer only laminated on the surface of the foam laminate, or may be a double-sided pressure-sensitive adhesive sheet attached to the surface of the foam laminate. It is, however, preferable that the pressure-sensitive adhesive material be a pressure-sensitive adhesive layer alone. The double-sided pressure-sensitive adhesive sheet includes a substrate and pressure-sensitive adhesive layers provided on both sides of the substrate. The double-sided pressure-sensitive adhesive sheet is used to bond one pressure-sensitive adhesive layer to the foam laminate and bond the other pressure-sensitive adhesive layer to another member.

The pressure-sensitive adhesive configuring the pressure-sensitive adhesive layer is not particularly limited, and for example, an acrylic-based pressure-sensitive adhesive, a urethane-based pressure-sensitive adhesive, a rubber-based pressure-sensitive adhesive, etc. may be used. Also, a release sheet such as release paper may be further stuck to the pressure-sensitive adhesive material.

The thickness of the pressure-sensitive adhesive material is preferably 5 to 200 μm, more preferably 7 to 150 μm, and further preferably 10 to 100 μm.

[Applications]

The applications of the foam laminate of the present invention and the pressure-sensitive adhesive tape including the foam laminate are not particularly limited, and are preferably used, for example, inside electronic devices.

Examples of electronic devices include portable electronic devices such as notebook-type personal computers, mobile phones, smartphones, tablet terminals, portable music devices, televisions, cameras, displays, game devices, electronic notes, and personal computers.

The electronic devices are preferably foldable electronic devices in which the display itself equipped with the electronic device is foldable. The foldable electronic devices are preferably portable electronic devices such as a mobile phones, smartphones, and tablet terminals. The display may be any of liquid crystal displays and organic EL displays, though not particularly limited.

In a foldable electronic device, the foam laminate may be used as a shock absorbing material for a display or as a sealing material for installation of the display in an electronic device. Specifically, the foam laminate may be disposed on the rear side of the display or on a frame for installing the display.

In the case where the foam laminate of the present invention is used in a foldable type, it may slide against the display panel when the display is folded. Since the foam laminate has good slipperiness as described above, the resistance does not increase and no snagging occurs, and thus problems caused by snagging are prevented. For example, even in the case where the surface opposite to the sliding surface is fixed through a pressure-sensitive adhesive material, problems such as peeling off of the pressure-sensitive adhesive material can be prevented.

Further, since the pressure-sensitive adhesive tape of the present invention allows adhesive residue not to be left

during rework, for example, the pressure-sensitive adhesive tape stuck to an electronic device is easily rearranged and the electronic device is easily reused.

Furthermore, as described above, the foam laminate of the present invention has excellent step tracking property and impact absorption property. Therefore, in the case of using the pressure-sensitive adhesive tape of the present invention for a display, a shock acting on the display can be sufficiently absorbed. Also, the pressure-sensitive adhesive tape of the present invention can track steps on the casing of a display, etc., so that the gap between the pressure-sensitive adhesive tape and the casing, etc. can be reduced. Further, since the foam laminate of the present invention has excellent waterproof properties, it can be suitably used in applications where waterproof properties are required.

The foam laminate or the pressure-sensitive adhesive tape of the present invention may be wound into a roll to form a roll body. In the case where the foam laminate of the present invention is formed into a roll body, a surface resin layer having a high friction coefficient is provided on the surface, so that occurrence of blocking or the like can be reduced.

In the case where the pressure-sensitive adhesive tape is made into a roll body, it is preferable that one surface of the tape include a surface resin layer and the other surface include a pressure-sensitive adhesive material. With such a configuration, as described above, blocking can be appropriately prevented even without a release film.

Examples

The present invention will be explained in more detail with reference to examples, though the present invention is not limited to these examples at all.

[Measurement method]

The methods for measuring and evaluating each physical property are as follows.

<Thickness of core layer and surface resin layer>

A cross section of the foam laminate or the foam was photographed using a digital microscope (manufactured by Keyence Corporation, product name: VHX-900), and each of the thicknesses of the core layer and the surface resin layer was measured from the photographed image.

<Total thickness (thickness of foam laminate)>

The sum of the thickness of the core layer and the thickness of the surface resin layer was defined as the thickness of the foam laminate.

<Apparent density and expansion ratio>

The apparent density was measured in accordance with JIS K7222. The reciprocal of the apparent density ($g/cm^3$) was defined as the expansion ratio ($cm^3/g$).

<25% Compression strength>

The measurement was performed at a temperature of 23°C by the method in accordance with JIS K 6767.

<Tensile strength>

The foam laminates and foams prepared in each of Examples and Comparative Examples were cut into dumbbell-shape No. 1 as specified in JIS K6251 4.1. These were used as samples and subjected to tension measurement in the MD direction at a measurement temperature of 23°C and a rate of 500 mm/min using a tensile tester (product name: Tensilon RTF235, manufactured by A&D Co., Ltd.).

<Static friction coefficient>

According to the method specified in JIS K 7125, the foam laminate or foam obtained in each of Examples and Comparative Examples was placed on an SUS plate (SUS 304). A sliding plate with a felt on the bottom was placed thereon, and a 200-g weight was further placed on the sliding plate. The foam laminate or foam was pulled in a direction parallel to the contact interface, and the static friction coefficient was measured when the foam laminate or foam started to move.

<Glossiness>

The glossiness of the surface of the foam laminate was measured according to JIS Z 8741 using a "Gloss Checker IG-331" manufactured by HORIBA, Ltd. at an incidence angle of 60°.

<Slipperiness evaluation>

A pressure-sensitive adhesive was applied to one side of the foam laminate or foam obtained in each Example and Comparative Example to form a pressure-sensitive adhesive layer, and the foam laminate or foam was stuck to a foldable casing (polyimide film: 25 μm) through the pressure-sensitive adhesive layer. A stainless-steel plate (SUS) specially processed to be bendable was left in a bent state for 24 hours. Then, peeling off of the pressure-sensitive adhesive layer was visually evaluated. Those having no peeling off of the pressure-sensitive adhesive layer were rated as "A", and those having peeling off of the adhesive layer were rated as "C".

<Reworkability evaluation>

After applying an adhesive to both sides of the foam laminate or foam produced in each Example and Comparative Example, the foam laminate or foam was sandwiched between SUS plates and bonded to obtain a measurement sample. The blade of a cutter (manufactured by OLFA, product name "foldable blade cutter knife") was inserted in the MD direction against the side of the foam laminate or foam of the measurement sample, and the foam laminate or foam was cut (cleaving) by sliding the cutter in the MD direction. Subsequently, the foam laminate or foam after tear-opening was peeled off from the SUS plate as adherend, and the SUS plate was observed after peeling. Reworkability was evaluated based on the remaining amount of the adhesive (adhesive residue). Those with no adhesive residue at all were rated as "A", those with almost no adhesive residue were rated as "B", and those with a lot of adhesive residues were rated as "C".

<Necessity of wrinkle correction work during production>

When the foam laminate or foam obtained in each Example and Comparative Example was wound up to a length of 300 m, with a width of 1020 mm, on a core having a diameter of 76.2 mm, the workability was evaluated. The case where no wrinkles were generated and no correction was required during winding was evaluated as "A", and the case where correction to fix the wrinkles was required during winding was evaluated as "B".

Each component used in the respective Examples and Comparative Examples was as follows.

Polyolefin resin: linear low-density polyethylene resin obtained using a metallocene catalyst, product name "Kernel KF283" manufactured by Japan Polyethylene Co., Ltd.
Silicone compound: "Exfora (registered trademark) LL1513", masterbatch product (silicone compound: 30 mass%, LLDPE: 70 mass%)
Foaming agent: azodicarbonamide
Decomposition temperature regulator: zinc oxide, manufactured by Sakai Chemical Industry Co., Ltd., product name "OW-212F"
Antioxidant: 6-di-t-butyl-p-cresol

[Example 1]

An expandable composition for the core layer was prepared by feeding a polyolefin resin, a foaming agent, a decomposition temperature regulator, and an antioxidant to a second extruder in the respective blending amounts shown in Table 1 and melt-kneading at 130°C. Also, a resin composition for the surface resin layer was prepared by feeding a polyolefin resin, a silicone compound, a decomposition temperature regulator, and an antioxidant to a first and a third extruder in the respective blending amounts shown in Table 1 and melt-kneading at 130°C.

The expandable composition was co-extruded from the second extruder at a thickness of 330 μm, and the resin composition was co-extruded from each of the first and third extruders at a thickness of 220 μm, so that a non-foam laminated sheet having a middle layer made of the expandable composition for the core layer and surface layers made of the resin composition for the surface resin layer laminated on both sides of the middle layer was obtained.

Subsequently, the laminated sheet was irradiated with an electron beam of 4.0 Mrad at an acceleration voltage of 550 kV to be crosslinked. Then, the crosslinked laminated sheet was continuously sent into a foaming furnace maintained at 250°C by hot air and an infrared heater so as to be heated. As a result, the middle layer caused foaming. The laminated sheet was stretched to a target thickness in a stretching step to obtain a foam laminate of Example 1 composed of non-foam (surface resin layer 1)/foam (core layer)/non-foam (surface resin layer 2). Each physical property of the resulting foam laminate was also measured and evaluated. The results are shown in Table 1.

[Example 2]

The same procedure as in Example 1 was performed except that a corona treatment was performed on both surfaces of the resulting foam laminate. The corona treatment was performed at an output of 0.15 kW and a conveying speed of 5.0 m/min.

[Example 3]

A foam laminate was obtained in the same manner as in Example 1, except for the following : changing the content of the foaming agent in the expandable composition as shown in Table 1, extruding the expandable composition from the second extruder at a thickness of 330 μm and the resin composition from the first and third extruders at a thickness of 220 μm, respectively, so that the thickness of each layer was as shown in Table 1, and adjusting the stretching conditions.

[Example 4]

A laminated intermediate composed of a non-foam (surface resin layer)/foam (core layer)/non-foam (surface resin layer) was obtained in the same manner as in Example 1, except that the formulation of each composition was changed as shown in Table 1. Then, the core layer configuring the laminated intermediate was sliced in the plane direction to obtain two foam laminates having a surface resin layer provided on one side of the core layer. Of the two foam laminates thus obtained, one of the foam laminates was subjected to measurement and evaluation of each physical property. The thickness of the core layer and the total thickness listed in Table 1 are those after slicing the core layer.

The core layer was sliced using a cutter blade. Any of the surface resin layers obtained before slicing the core layer was obtained by blending the compositions for surface resin layer shown in Table 1.

[Comparative Examples 1 and 2]

A foam composed of a foam layer alone was obtained in the same manner as in Example 1, except that no raw material was fed to the first and third extruders, no resin composition was laminated on the layer composed of the expandable composition for the core layer, and the thickness of the resulting foam was adjusted to be as shown in Table 1. The resulting foam was also evaluated by measuring each physical property. The results are shown in Table 1.

[Comparative Example 3]

The same procedure was performed as in Example 1, except that blending of the resin composition for the surface resin layer was changed as shown in Table 1, such that no silicone compound was blended in the surface resin layer.

[Table 1]

| | | Example 1 | | | Example 2 | | | Example 3 | | | Example 4 | | Comparative Example 1 | Comparative Example 2 | Comparative Example 3 | | |
|---|---|---|---|---|---|---|---|---|---|---|---|---|---|---|---|---|---|
| | | Surface resin layer 1 | Core layer | Surface resin layer 2 | Surface resin layer 1 | Core layer | Surface resin layer 2 | Surface resin layer 1 | Core layer | Surface resin layer 2 | Surface resin layer | Core layer | Foam | Foam | Surface resin layer 1 | Core layer | Surface resin layer 2 |
| Composition (part by mass) | Polyolefin resin | 75 | 100 | 75 | 75 | 100 | 75 | 75 | 100 | 75 | 75 | 100 | 100 | 100 | 100 | 100 | 100 |
| | Silicone compound | 25 | | 25 | 25 | | 25 | 25 | | 25 | 25 | | | | | | |
| | Foaming agent | | 4.5 | | | 4.5 | | | 4.6 | | | 6.3 | 5.5 | 2 | | 4.5 | |
| | Decomposition temperature regulator | 1 | 1 | 1 | 1 | 1 | 1 | 1 | 1 | 1 | 1 | 1 | 1 | 1 | 1 | 1 | 1 |
| | Antioxidant | 0.5 | 0.5 | 0.5 | 0.5 | 0.5 | 0.5 | 0.5 | 0.5 | 0.5 | | 0.5 | 0.5 | 0.5 | 0.5 | 0.5 | 0.5 |
| Surface treatment | Corona treatment | absent | | | present | | | absent | | | absent | | absent | absent | absent | | |

(continued)

| | | Example 1 | | | Example 2 | | | Example 3 | | | Example 4 | | Comparative Example 1 | Comparative Example 2 | Comparative Example 3 | | |
|---|---|---|---|---|---|---|---|---|---|---|---|---|---|---|---|---|---|
| | | Surface resin layer 1 | Core layer | Surface resin layer 2 | Surface resin layer 1 | Core layer | Surface resin layer 2 | Surface resin layer 1 | Core layer | Surface resin layer 2 | Surface resin layer | Core layer | Foam | Foam | Surface resin layer 1 | Core layer | Surface resin layer 2 |
| Foam laminate | Thickness of each layer (mm) | 0.04 | 0.6 | 0.04 | 0.04 | 0.6 | 0.04 | 0.02 | 0.2 | 0.02 | 0.02 | 0.98 | - | - | 0.04 | 0.6 | 0.04 |
| | Total thickness (mm) | 0.68 | | | 0.68 | | | 0.24 | | | 1.00 | | 0.7 | 0.3 | 0.68 | | |
| | Thickness ratio (middle layer/surface layer) | 1 | 15 | 1 | 1 | 15 | 1 | 1 | 10 | 1 | 1 | 49 | - | - | 1 | 15.0 | 1 |
| | expansion ratio of each layer ($cm^3/g$) | 1 | 8.6 | 1 | 1 | 8.6 | 1 | 1 | 12 | 1 | 1 | 15.7 | 15.0 | 8.0 | 1 | 8.9 | 1 |
| | Apparent density of each layer ($g/cm^3$) | 1 | 0.12 | 1 | 1 | 0.12 | 1 | 1 | 0.08 | 1 | 1 | 0.06 4 | 0.067 | 0.125 | 1 | 0.11 | 1 |
| | 25% compression strength kPa | 114 | | | 114 | | | 60 | | | 43 | | 45 | 75 | 104 | | |
| | Tensile strength MPa | 3.6 | | | 3.6 | | | 3.0 | | | 2.1 | | 1.1 | 0.4 | 3.6 | | |
| | Static friction coefficient | 0.35 | | | 0.51 | | | 0.32 | | | 0.36 | | 0.65 | 0.69 | 0.61 | | |
| | Glossiness (60°) | 56 | | | 56 | | | 58 | | | 56 | | 14 | 36 | 44 | | |
| Evaluation result | Slipperiness evaluation | A | | | A | | | A | | | A | | C | C | C | | |
| | Reworkability evaluation | A | | | A | | | A | | | C | | C | B | A | | |
| | Necessity of wrinkle correction work during production | B | | | B | | | A | | | B | | A | A | B | | |

*The static friction coefficient and glossiness were measured on both surfaces, and the larger value was recorded. In the case where the static friction coefficient and glossiness of any of both surfaces are within the scope of the claims of the present invention, the laminate is within the scope of the present invention.

As described above, the foam laminates of Examples 1 to 4 have a core layer as a foam and a surface resin layer containing a silicone compound, and have a static friction coefficient of 0.64 or less. As a result, the foam laminates have good slipperiness, and even in the case where the foam laminate is stuck to a foldable casing for use and the casing is folded, problems such as peeling of the pressure-sensitive adhesive layer do not occur. Accordingly, it can be understood that the foam laminates can be suitably used in foldable electronic devices. Also, the foam laminates of Examples 1 to 3 had good reworkability, with no adhesive residue when peeled off after being stuck to an adherend. Furthermore, it can be understood that, due to having good flexibility with low compression strength, the foam laminate is suitably used as a sealing material, shock absorbing material, etc.

In contrast, the foams or foam laminates of Comparative Examples 1 to 3 contain no silicone compound in the surface resin layer, having a large static friction coefficient of more than 0.64. As a result, they had poor slipperiness, and in the case where they were stuck to a foldable casing and the casing was folded, the resistance increased to cause snagging, which applied a large force to the pressure-sensitive adhesive tape and caused a peeling-off problem of the pressure-sensitive adhesive tape. Also, in Comparative Examples 1 and 2, due to single-layer foams, adhesive residue was present in peeling-off after being stuck to an adherend, so that reworkability was not enhanced.

Reference Signs List

10: Foam laminate
11: Core layer
12: Surface resin layer

## Claims

1. A foam laminate comprising a core layer as a foam and a silicone compound-containing surface resin layer provided on at least one surface of the core layer, the foam laminate having a static friction coefficient of 0.64 or less.

2. The foam laminate according to claim 1, wherein the static friction coefficient is 0.6 or less.

3. The foam laminate according to claim 1, having a thickness of 0.05 to 0.3 mm.

4. The foam laminate according to claim 1, wherein the surface resin layer has a silicone compound content of 1 to 40 mass%.

5. The foam laminate according to claim 1, wherein the surface resin layer is any one of a foam or a non-foam.

6. The foam laminate according to claim 1, wherein the surface resin layer comprises a polyolefin-based resin.

7. The foam laminate according to claim 1, wherein the silicone compound is a silicone-olefin copolymer.

8. A pressure-sensitive adhesive tape comprising the foam laminate according to any one of claims 1 to 7 and a pressure-sensitive adhesive material provided on at least one surface of the foam laminate.

Fig. 1

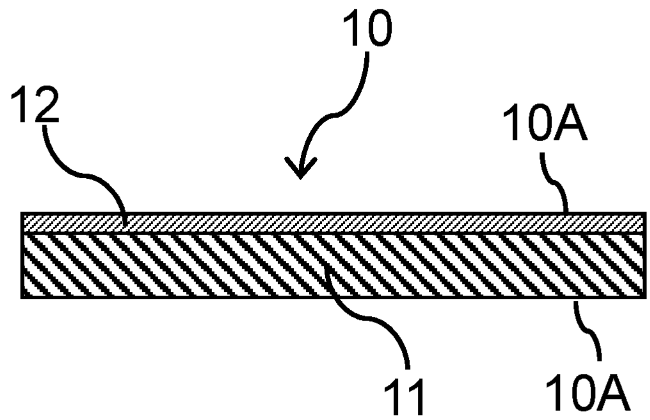


Fig. 2

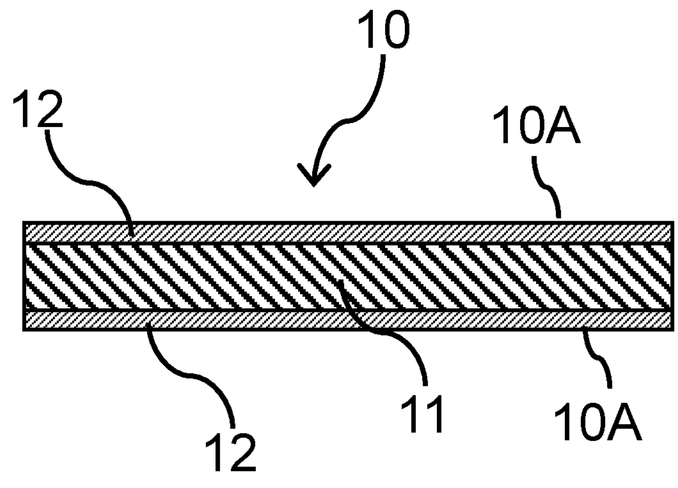

## INTERNATIONAL SEARCH REPORT

International application No. **PCT/JP2024/031358**

**A. CLASSIFICATION OF SUBJECT MATTER**

***B32B 5/18***(2006.01)i; ***B32B 27/00***(2006.01)i; ***C09J 7/26***(2018.01)i; ***C09J 7/29***(2018.01)i; ***C09J 7/38***(2018.01)i
FI: B32B5/18; B32B27/00 M; B32B27/00 101; C09J7/38; C09J7/26; C09J7/29

According to International Patent Classification (IPC) or to both national classification and IPC

**B. FIELDS SEARCHED**

Minimum documentation searched (classification system followed by classification symbols)

B32B; C09J

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 4546306 B2 (DAI NIPPON PRINTING CO., LTD.) 15 September 2010 (2010-09-15) claims, paragraphs [0003], [0010]-[0035], examples 1, 2, 4 | 1-5, 8<br>6-7 |
| X<br>A | WO 2004/111144 A1 (GE TOSHIBA SILICONES CO., LTD.) 23 December 2004 (2004-12-23) claims, paragraphs [0001]-[0002], [0015], [0020]-[0061], examples 1-4 | 1-2, 4-6<br>3, 7-8 |
| X<br>Y | WO 2017/170220 A1 (ZEON CORPORATION) 05 October 2017 (2017-10-05) claims, paragraphs [0002], [0009], [0018], [0038]-[0039], [0060], [0069], [0076]-[0077], [0084], examples 2-6 | 1-2, 5<br>7 |
| X | JP 08-291243 A (ZEON KASEI CO., LTD.) 05 November 1996 (1996-11-05) claims, paragraphs [0001]-[0004], [0024], [0026], examples | 1-2, 4-5 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **12 November 2024** | **26 November 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/031358**

**C. DOCUMENTS CONSIDERED TO BE RELEVANT**

| Category* | Citation of document, with indication, where appropriate, of the relevant passages | Relevant to claim No. |
|---|---|---|
| Y | JP 6310297 B2 (MITSUI CHEMICALS, INC.) 11 April 2018 (2018-04-11) claims (particularly, claim 4), paragraphs [0007]-[0008], [0018]-[0019], [0067]-[0079] | 7 |
| Y | JP 2019-137033 A (TORAY ADVANCED FILM CO., LTD.) 22 August 2019 (2019-08-22) claims (particularly, claim 3), paragraphs [0016]-[0018], [0033], [0054] | 7 |

Form PCT/ISA/210 (second sheet) (July 2022)

**INTERNATIONAL SEARCH REPORT**
**Information on patent family members**

International application No.
**PCT/JP2024/031358**

| Patent document cited in search report | Publication date (day/month/year) | Patent family member(s) | Publication date (day/month/year) |
|---|---|---|---|
| JP 4546306 B2 | 15 September 2010 | JP 2006-274508 A | |
| WO 2004/111144 A1 | 23 December 2004 | US 2006/0167175 A1<br>claims, paragraphs [0001]-[0002], [0019], [0024]-[0025], examples 1-4<br>EP 1634934 A1<br>CA 2527051 A<br>CN 1806023 A | |
| WO 2017/170220 A1 | 05 October 2017 | US 2019/0270874 A1<br>claims, paragraphs [0002]-[0003], [0010], [0021], [0088]-[0094], [0131]-[0132], [0148], [0160]-[0162], [0183]-[0185], examples 2-6<br>US 2019/0127566 A1<br>WO 2017/170221 A1<br>EP 3438188 A1<br>EP 3438189 A1<br>CA 3019093 A<br>CN 108884286 A<br>KR 10-2018-0127369 A<br>MX 2018011860 A<br>TW 201738309 A<br>TW 201738308 A<br>CA 3019090 A<br>CN 108884285 A<br>KR 10-2018-0129792 A<br>MX 2018011859 A | |
| JP 08-291243 A | 05 November 1996 | (Family: none) | |
| JP 6310297 B2 | 11 April 2018 | JP 2015-189088 A | |
| JP 2019-137033 A | 22 August 2019 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2017206587 A